# EUROPEAN PATENT SPECIFICATION

(11) **EP 0 500 728 B1**
(45) Date of publication and mention of the grant of the patent: **07.06.1995**
(21) Application number: 90917325.4
(22) Date of filing: 26.10.1990
(51) Int. Cl.: C01B 7/01, C01B 7/04

(54) **EFFICIENT PRODUCTION OF CHLORINE FROM HYDROGEN CHLORIDE**
LEISTUNGSFÄHIGES VERFAHREN ZUR HERSTELLUNG VON CHLOR AUS CHLORWASSERSTOFF
PRODUCTION A RENDEMENT ELEVE DE CHLORE A PARTIR DE CHLORURE D'HYDROGENE

(30) Priority: 02.11.1989 US 430805
(43) Date of publication of application: 02.09.1992
(73) Proprietor: UNIVERSITY OF SOUTHERN CALIFORNIA, Los Angeles, California 90007 (US)
(72) Inventor: BENSON, Sidney, W., Los Angeles, CA 90049 (US); HISHAM, Mohamed, W., M., Grand Island, NY 14072 (US)
(74) Representative: Silverman, Warren
(86) International application number: US9006184
(87) International publication number: WO9106505

(56) References cited:
- FR-A- 2 643 893
- GB-A- 584 790
- US-A- 2 451 870
- US-A- 2 577 808
- US-A- 3 210 158
- US-A- 3 260 678
- US-A- 3 542 520
- US-A- 3 561 923
- US-A- 4 803 065
- US-A- 4 959 202

## Description

This application relates to improved processes for the chemical production of chlorine from gaseous HCl. The gaseous HCl can be part of a complex mixture.

In recent years, increasing amounts of HCl are being obtained as a by-product of several manufacturing processes such as the industrial production of chlorinated hydrocarbons. At the same time industrial demand for gaseous chlorine has also greatly increased. As a result there is a great need for more efficient chemical processes for producing chlorine from hydrogen chloride, especially processes capable of large-scale industrial application.

In 1868, Deacon developed a process by which chlorine is produced by direct oxidation of gaseous HCl with O₂ in the presence of a CuCl₂ catalyst. This process is described by the overall chemical equation

HCl (g) + 1/4 O₂ (g) → 1/2 H₂O (g) + 1/2 Cl₂ (g). (1)

Reaction (1) in the presence of a CuCl₂ catalyst is a fast overall exothermic process which is expected to reach equilibrium under normal industrial operating conditions of 700°K to 750°K.

A number of engineering problems are associated with the Deacon process. The temperatures of the process reduce the equilibrium constant for the conversion, resulting in incomplete conversion of the HCl and thereby reducing yield. This is especially a problem when the Deacon process is carried out at a single temperature in a single vessel. furthermore, at elevated temperatures above 675°K, the catalyst's activity rapidly decreases, mainly because of volatilization of the CuCl.

Since the early 1900's various efforts have been made to improve the Deacon Process. Several modifications of the catalyst's composition have been suggested, such as addition of less volatile rare earth metals in the form of chlorides or oxides, and addition of various copper salts, which are promoted by chlorides or oxides of a number of metals such as V, Be, Mg, Bi, and Sb. Several researchers have proposed the addition of NaCl and KCl, which form double salts with the CuCl. These double salts are less volatile than the CuCl itself. Cr₂O₃ and V₂O₅ have also been shown to be efficient catalysts for the process. However, few, if any, of these modifications have been shown to improve efficiency of the process under actual industrial operation conditions.

Particular modifications of the Deacon process are described in U.S. Patent No. 2,206,399 to Grosvenor et al., U.S. Patent No. 2,577,808 to Pye et al., and J. Th. Quant, J. van Dam, W.F. Engel, and F. Wattimena, "The Shell Chlorine Process," The Chemical Engineer, 224-232 (1963).

U.S. Patent No. 2,206,399 to Grosvenor et al. discloses the chlorination and oxidation of a variety of chlorine-carrying multivalent metals, including chromium, cobalt, copper, manganese, nickel, magnesium, and iron. The metal is preferably iron.

U.S. Patent No. 2,577,808 to Pye et al. discloses the use of iron as a chlorine carrier in a fluidized bed reaction where a granular contact mass including ferric oxide falls by gravity through a heating or cooling zone, and then through a chloridizing zone which has a temperature of 300°C at the top and 500°C at the bottom. Thereafter, the chlorine carrier, now in the form of ferric chloride, falls into an oxidizing zone which has a temperature of 500°C at the top and 550°C at the bottom to oxidize the particles to ferric oxide. These particles are then returned to the top, cooled, and recycled.

The *Chemical Engineer* article by J. Th. Quant et al. describes a variation of the Deacon process using a Cu catalyst adsorbed on a porous carrier containing alkali metal chlorides and/or lanthanide chlorides, the so-called "Shell catalyst." The reaction is optimally carried out in a fluidized bed.

A number of other processes have been proposed for the recovery of Cl₂ from waste HCl. These processes include:
(1) The Kel-Chlor Process. This process involves the reaction of HCl with nitrosylsulfuric acid (HNSO₅) contained in a stream of H₂SO₄ to produce nitrosyl chloride (NOCl) with eventual production of Cl₂ by oxidation of NOCl.
(2) Direct Electrolysis of Hydrochloric Acid.
(3) Direct Oxidation with an Inorganic Oxidizing Agent. Such oxidizing agents include nitrogen dioxide, sulfur trioxide, or a nitric/sulfuric acid mixture. The reaction is carried out in the liquid phase.
(4) Weldon Process. This process is based on the oxidation of aqueous hydrochloric acid with manganese dioxide, with subsequent reconversion of manganous chloride by air blowing in the presence of lime.

None of these processes can be characterized as completely successful. Direct electrolysis of HCl is only exploitable where power costs are low and the recovered co-product, hydrogen, can be made to bear an appropriate share of the manufacturing costs. In the present industrial environment of high and unpredictably fluctuating energy costs, such a process has little use. The processes involving direct oxidation with an inorganic oxidizing agent are very corrosive and give relatively low yields of chlorine. The various two-stage processes, including the Weldon process and variations of the Deacon process, attain far lower conversions under normal industrial operating conditions than are claimed to occur theoretically. Also, catalytic activity decline and loss due to catalyst volatilization still remain severe problems and major components of the final product cost. The Kel-Chlor process is very costly in plant design, safety features, and energy

GB-A-584790 discloses a method of producing Cl₂ from HCl in which HCl is contacted with a catalyst containing an oxide of manganese or chromium at an elevated temperature to produce Cl₂. The catalyst is then regenerated by heating in the presence of oxygen. It is disclosed that the process converts between 50% and 80% of the HCl to chlorine.

Accordingly, there is a need for an efficient process for the preparation of chlorine from HCl that gives a nearly quantitative conversion of HCl to chlorine, operates under conditions in which the catalyst does not volatilize and in which the activity of the catalyst remains stable, and operates at relatively moderate temperatures to prevent corrosion and minimize the extrinsic energy input required.

We have developed an improved process for producing Cl₂ from HCl that remedies defects of previous processes for the production of Cl₂. This improved process functionally separates the Deacon process into two steps: Step 1, a chloridizing step; and Step 2, an oxidizing step. A process according to the present invention is operable at moderate temperatures and uses a catalyst that does not volatilize and has a relatively long lifetime under the actual reaction conditions of the process. It gives a high yield of Cl₂ and efficient conversion of the HCl to Cl₂, and can be practiced using a simple apparatus. It requires only limited input of extrinsic energy, making it economical to operate.

According to the present invention, there is provided a process for producing Cl₂ from HCl, comprising the steps of:
(a) contacting, in a stationary bed and at a first temperature, a gas containing HCl with a catalyst containing one or more transition metal oxides; and then
(b) contacting, in said stationary bed and at a second temperature, said catalyst with a source of oxygen,
   characterised in that the catalyst comprises (i) a transition metal oxide selected from MnO₂, Co₂O₃, Co₃O₄, Cr₂O₃, Ni₂O₃, NiO, Mo₂O₃, CuO or a combination thereof and (ii) an alkali metal chloride selected from LiCl, NaCl, KCl or a combination thereof, in the ratio of about 1 mole of alkali metal chloride per mole of transition metal oxide, and is supported on an inert support, in that said first temperature is in the range from about 25°C to about 250°C, such that the transition metal oxide is converted to a transition metal chloride by the HCl with elimination of water; and in that the second temperature is at least 300°C, such that Cl₂ is evolved and the transition metal chloride in the catalyst is reconverted to the transition metal oxide for reuse.

In a preferred embodiment of the invention, the transition metal oxide is MnO₂, Co₂O₃, or Co₃O₄, or a combination thereof, most preferably MnO₂. In this version, described for convenience with MnO₂, the MnO₂ is converted to MnCl₂ by the HCl and water and Cl₂ are evolved in the first step, which preferably occurs at a temperature of from about 100°C to about 250°C. Preferably, the MnCl₂ is contacted with the source of oxygen in the second step at a temperature of from about 350°C to about 375°C. In this version of the invention, Cl₂ is evolved in both steps of the reaction.

In another embodiment of the invention, the transition metal oxide is Cr₂O₃, NiO, Ni₂O₃, or MO₂O₃, or a combination thereof. In this version, two changes are made from the preferred version. In the first set, the HCl is preferably contacted with the catalyst containing the transition metal oxide at a temperature of from about 100°C to about 225°C. In the second step, the resulting transition metal chloride is preferably contacted with the source of oxygen at a temperature of from about 310°C to about 375°C.

In a third embodiment of the invention, the transition metal oxide is CuO. In this version of the invention, the temperature range in the first step is from about 100°C to about 300°C. The temperature range in the second step is from about 310°C to about 375°C, preferably from about 310°C to about 330°C, to prevent volatilization of the copper-containing catalyst.

The weight of the catalyst preferably comprises about 10 to about 20 percent of the total weight of the catalyst and the inert support. The inert support is preferably gamma-alumina, pumice, silica, or molecular sieve material.

The source of oxygen for these processes can be O₂; the O₂ can be diluted with N₂. The source of oxygen can be preheated to provide at least some of the necessary heat for the evolution of Cl₂ and the reconversion of the transition metal chloride in the catalyst to the transition metal oxide.

The first step of the process can occur in a first reaction zone and the second step in a second reaction zone. In this embodiment, the process comprises the additional step of recycling reconverted transition metal oxide from the second reaction zone to the first reaction zone.

For a better understanding of the invention and to show how the same may be carried into effect, reference will now be made, by way of example only to the accompanying drawing which is a schematic diagram of a single-state reaction vessel usable for the process of the present invention.

An improvement in the Deacon process that we have developed meets the needs of high yield, stability of catalyst activity, and operability at moderate temperatures. This improvement avoids the use of excessively complex apparatus and can be performed using a stationary bed.

This improvement functionally separates the Deacon process into two steps: Step 1, a chloridizing step; and Step 2, an oxidizing step. This functional separation can be performed either by physically moving the catalyst from one reaction vessel to another, or by cycling the temperature between the optima for each step in a single vessel. In the first of these alternatives, each step of the process is actually performed in a separate reaction vessel whose temperature is controlled independently.

By separating the two steps, we avoid the equilibrium limit on the reaction, we avoid having the corrosive mixture of HCl and H₂O present in the same process stream.

### A. Thermodynamic Considerations

There is general agreement that the reaction mechanism of the Deacon process with a Cu catalyst is described by the following overall mechanistic scheme:

2CuCl₂(s) → 2CuCl(s) + Cl₂(g) (2)

2CuCl₂(s) + 1/2 O₂(g) → CuOCuCl₂(s) (3)

CuOCuCl₂(s) + 2HCl(g) → 2CuCl₂(s) + H₂O(g) (4)

Adding equations (2) and (3),

2CuCl₂(s) + 1/2 O₂(g) → CuOcuCl₂(s) + H₂O(g) (5)

Equations (4) and (5) can be reformulated as follows:

CuCl₂(s) + 1/2 O₂(g) → CuO(s) + Cl₂(g) (6)

CuO(s) + 2HCl(g) → CuCl₂ + H₂O(g) (7)

In 1962, Allen, in J.A. Allen, J. App. Chem. (London) 12, 406 (1962), suggested that for a metal to be an effective Deacon process catalyst the free energy changes associated with reactions (6) and (7) must be small (approximately zero). Only a limited number of metals satisfies this criterion, and with the exception of Mg, all of these metals have been found to be effective Deacon process catalysts.

We have recently developed a theoretical technique for accurate estimating of the thermodynamic properties of metal-oxy and chloro-hydroxy intermediate compounds. As a result, it is now possible to study in detail the thermochemistry of the Deacon process. Based on our knowledge of the thermochemical properties of these intermediate reactive species and after testing thermochemically the validity of a number of alternative mechanistic routes we have proposed the following reaction mechanism for the Deacon process, using a Cu catalyst:
CuO formation:

CuCl₂(s) + 1/2 O₂(g) → CuO(s) Cl₂(g) (6)

HCl absorption steps:

CuO(s) HCl(g) → Cu(OH) Cl(s) (8)

Cu(OH)Cl(s) → 1/2 Cu₂OCl₂(s) + 1/2 H₂O(g) (9)

1/2 Cu₂OCl₂(s) → 1/2 CuO(s) + 1/2 CuCl₂(s) (10)

Valency change:

CuCl₂(s) → CuCl(s) + 1/2 Cl₂(g) (11)

Catalyst regeneration:

CuCl(s) + 1/2 O₂(g) → 1/2 Cl₂(g) + CuO(s) (12)

Since the reaction mechanism of the Deacon process consists of both exothermic and endothermic steps, one expects an optimal temperature range for the process, which has been found experimentally. The observation, furthermore, that the true catalyst for the process is a mixture of the oxide and chloride forms of Cu, the oxide form being necessary for HCl adsorption and the chloride form participating in the Cl₂ release step, opens new avenues for further engineering optimization in terms of feed composition, pressure and temperature cycling, and adaptive control.

### B. Choice of Catalyst

With the thermodynamic factors taken into account, the optimal catalyst in the Deacon process is a variation of the so-called "Shell Catalyst." This catalyst comprises a transition metal oxide, an alkali metal chloride and, optimally, a trivalent rare earth metal chloride or rare earth metal oxide. The trivalent rare earth metal chloride or oxide serves as a promoter and is subsequently referred to by this term.

The transition metal oxide is one of MnO₂, Co₂O₃, Co₃O₄, Cr₂O₃, Mo₂O₃, CuO, NiO, or Ni₂O₃, or mixtures and combinations thereof.

The alkali metal chloride is preferably LiCl, NaCl, or KCl. Most preferably, it is NaCl or KCl. A mixture of any of these alkali metal chlorides can also be used. The promoter is preferably LaCl₃ or PrCl₃, but other similar rare earth chlorides, such as NdCl₃, or a mixture of NdCl₃ and PrCl₃, as well as trivalent rare earth metal oxides, such as Pr₂O₃, can also be used as the promoter. The alkali metal chloride is typically present in the catalyst at a ratio of about 1 mole of alkali metal chloride per mole of transition metal oxide. The promoter, if present, is at a ratio of up to 0.2 mole per mole of transition metal oxide.

The catalyst is typically supported on an inert support. The inert support is preferably gamma-alumina, pumice, silica or molecular sieve material. The weight of the catalyst is preferably about 10 percent to about 20 percent of the total weight of the catalyst and the inert support taken together. Typically, the catalyst is incorporated in high-surface-area material, with a surface area of 100-500 m²/g.

### C. Reaction with Catalyst Using MnO₂

The reaction with a catalyst using MnO₂ is exceptional in that Cl₂ is released in both steps of the reaction: step 1, the chloridizing step; and step 2, the oxidizing step.

In step 1, the chloridizing step, the catalyst is contacted with a gas containing HCl at a temperature of from about 25°C to about 250°C, preferably from about 100°C to about 250°C, more preferably no higher than 225°C. As a result of this contact, the MnO₂ is converted into MnCl₂, being reduced from a (+4) oxidation state to a (+2) oxidation state. The exit stream of the reaction contains steam and Cl₂ according to the equation

4HCl(g) + MnO₂(s) → MnCl₂(s) + 2H₂O(g) + Cl₂(g). (13)

The steam and Cl₂ can be easily separated from each other or condensed together and subsequently separated as needed. This step is exothermic, with a ΔH of -6 kcal/mole.

In step 2, the oxidizing step, the chloridized catalyst is then contacted with a source of oxygen at a temperature of at least 300°C but less than about 400°C but sufficiently high that Cl₂ is evolved and the MnCl₂ is reconverted to the original catalytic MnO₂ for reuse in the first step. The temperature of step 2 is increased over that of step 1. The temperature is preferably from about 350°C to about 375°C at this step. This step is also exothermic with a ΔH of -8 kcal, and takes place according to the equation

MnCl₂(s) + O₂(g) → MnO₂(s) + Cl₂(g). (14)

The source of oxygen in this step can be O₂ gas, pure or diluted with N₂, or air.

Preferably the source of oxygen is preheated to provide at least some of the necessary heat not provided by the reaction itself for the evolution of Cl₂ and the reconversion of MnCl₂ to MnO₂. Additional heat is required because of the considerable rise in temperature in going from the first step to the second step. Any O₂ not consumed can be recycled.

Typically, the pressure of the reaction is close to about 1 atmosphere, but there is no theoretical limit on the pressure, and use of a supra-atmospheric pressure, such as about 10 atmospheres, might be beneficial for the production of chlorine.

Co₂O₃ or Co₃O₄ can be substituted for MnO₂ in this version of this invention.

### D. Reaction Using Catalysts Containing Other Metal Oxides

The reaction using catalysts containing metal oxides other than MnO₂ proceeds similarly in two steps, except that in the first chloridizing step, no Cl₂ is released, only H₂O as steam or water vapor. In the second oxidizing step Cl₂ is released.

The temperature limits in the first step are preferably from about 100°C to about 225°C if a catalyst containing metal oxides other than CuO is used. If a catalyst containing CuO is used, the optimum temperature for the first step can range from about 100°C to about 300°C.

If the catalyst does not contain CuO, the temperature of the second step is at least about 300°C but less than about 400°C, sufficiently high that Cl₂ is evolved and the metal chloride is reconverted to a metal oxide for reuse in the first step. The temperature of the second step is increased over that of the first step. More preferably, the temperature in the second step is to be from about 310°C to about 375°C. If the catalyst does contain CuO, the temperature of the second step should be from about 310°C to 375°C. If the catalyst does contain CuO, the temperature of the second step should be from about 310°C to 375°C, more preferably from about 310°C to about 330°C. The maximum temperature should be limited when the catalyst contains CuO to avoid volatilization of the catalyst.

### E. Apparatus for Performing the Reaction

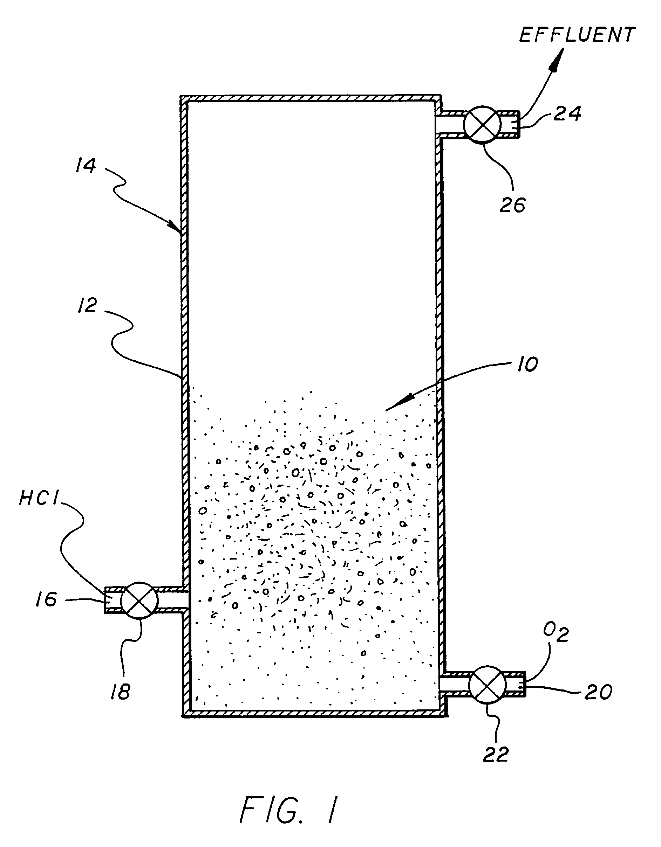

The reaction can be carried out in a simple reaction vessel as shown in Figure 1.

Figure 1 shows a reaction vessel suitable for carrying out the two-step process using a catalyst containing MnO₂. The catalyst 10 is contained in the body 12 of the reaction vessel 14. A first inlet 16, controlled by valve 18 admits the HCl-containing gas for the performance of the first, chloridizing, step. A second inlet 20, controlled by valve 22, admits the source of oxygen, such as O₂ gas, for the performance of the second, oxidizing step. An outlet 24, controlled by valve 26, allows escape of the effluent gas in each step for further processing. The vessel is surrounded by a temperature control mechanism (not shown) that can supply or remove heat as needed to keep the temperature within the required limits.

Alternatively, the reaction can be carried out in a fixed bed.

In another, preferred, alternative, the reaction can be carried out in an apparatus in which the first, chloridizing, step occurs in a first reaction zone and the second, oxidizing, step occurs in a second reaction zone. In this alternative, the reaction further comprises the step of recycling reconverted transition metal catalyst from the second reaction zone to the first reaction zone.

This invention will be better understood from the following Examples.

### Examples 1-4

### Reaction of Metal Oxide Catalysts with HCl and O₂

A quartz tube of 15 mm I.D. was packed with glass wool and about 10-12 g of alumina- or silica-supported metal oxide catalyst. The metal oxide content varied between 10 and 20 weight percent of the total weight of the catalyst, including the support. the tube was located in an electrically heated furnace whose temperature was adjustable.

In experiments with HCl, a diluent (Ar or N₂, about 20% by volume) was used and the gas mixture was circulated over the catalyst. Water was condensed in a trap cooled in dry ice. The amount of HCl adsorbed could be accurately (± 1%) measured from the pressure drop. All experiments were done between 100°C and 200°C initial temperature. Rates of adsorption were too fast to measure and no other products besides water and Cl₂ were ever observed.

In experiments with O₂, the HCl-saturated catalyst was preheated to the desired temperature, usually about 350°C, and O₂ circulated over the catalyst until no further Cl₂ was deposited in the dry ice trap. Measurements of Cl₂ were done by titration and O₂ consumption was measured by pressure drop. No products other than Cl₂ were ever found in the oxygen experiments.

The following metal oxides were tested:

### Example 1 - CuO

With CuO, HCl was completely absorbed at 150°C. At 315°C, some Cl₂ was observed using O₂. Much faster reaction occurred at 330-375°C. At 475°C, Cl₂ evolution with O₂ was rapid but some CuCl catalyst evaporated outside the oven region.

### Example 2 - NiO

With NiO at 190°C, HCl absorption was rapid and complete. Above 380°C, Cl₂ was quickly evolved using O₂.

### Example 3 - MnO₂

At 100-250°C, HCl was completely absorbed and both H₂O and Cl₂, both condensed, were liberated. The resulting MnCl₂ evolved Cl₂ slowly from 350° to 400° and then rapidly at about 400°C.

### Example 4 - V₂O₅

At 190°C, absorption was complete with only H₂O liberation. On heating the catalyst above 250°C , both Cl₂ and a volatile chloride, probably VO₂Cl or VOCl₃, were evolved.

All catalysts tested could be reused through a number of cycles of the experiment with the same results.

Based on the above findings and current knowledge of the chemistry of the process, we divided metal oxides into four categories:
(1) alkali metal oxides and alkaline earth metal oxides such as Na₂O, CaO, or MgO, whose chlorides do not react with O₂ below 900°C, and metal oxides such as Al₂O₃ that do not react above 100°C with HCl to form chlorides;
(2) CuO, Fe₂O₃ and V₂O₅, whose chlorides become volatile at temperatures where the reaction of O₂ with the chlorides is rapid;
(3) MnO₂ and Co₂O₃ or Co₂O₄, which produce Cl₂ together with H₂O when adsorbing HCl above 100°C; and
(4) Cr₂O₃ and NiO, which adsorb HCl completely between 100°C and 200°C and whose chlorides react rapidly above 450°C without forming volatile intermediates.

Oxides from classes (1) and (2), except for CuO, are not suitable for commercial processes. Oxides from classes (3) and (4) are suitable for such processes. All of them can be benefitted by mixtures with other oxides from these same categories and/or from mixtures with alkali metal halides which tend to lower the melting points of the chlorides formed in the reaction with HCl and then facilitate the rate of the later reaction with O₂.

A process according to the present invention has many advantages. Such a process is commercially useful for the preparation of chlorine from HCl and operates more efficiently than currently used processes by functionally separating the Deacon process into two steps: a chloridizing step and an oxidizing step. The process gives a nearly quantitative conversion of HCl to chlorine and operates under conditions in which the catalyst does not volatilize, and under which the activity of the catalyst remains stable. The process also requires only limited input of extrinsic energy and operates at relatively moderate temperatures and without corrosion of its surroundings.

## Claims

1. A process for producing Cl₂ from HCl, comprising the steps of:
(a) contacting, in a stationary bed and at a first temperature, a gas containing HCl with a catalyst containing one or more transition metal oxides; and then
(b) contacting, in said stationary bed and at a second temperature, said catalyst with a source of oxygen,
characterised in that the catalyst comprises (i) a transition metal oxide selected from MnO₂, Co₂O₃, Co₃O₄, Cr₂O₃, Ni₂O₃, NiO, Mo₂O₃, CuO or a combination thereof and (ii) an alkali metal chloride selected from LiCl, NaCl, KCl or a combination thereof, in the ratio of about 1 mole of alkali metal chloride per mole of transition metal oxide, and is supported on an inert support, in that said first temperature is in the range from about 25°C to about 250°C, such that the transition metal oxide is converted to a transition metal chloride by the HCl with elimination of water; and in that the second temperature is at least 300°C, such that Cl₂ is evolved and the transition metal chloride in the catalyst is reconverted to the transition metal oxide for reuse.

2. A process according to claim 1, characterised in that the transition metal oxide is MnO₂, Co₂O₃, Co₃O₄ or a combination thereof.

3. A process according to claim 2, characterised in that the first temperature is in the range from about 100°C to about 250°C.

4. A process according to claim 2 or 3, characterised in that the second temperature is in the range from about 350°C to 375°C.

5. A process according to claim 1, characterised in that the transition metal oxide is Cr₂O₃, Ni₂O₃, NiO, Mo₂O₃ or a combination thereof.

6. A process according to claim 5, characterised in that the first temperature is in the range from about 100°C to about 225°C.

7. A process according to claim 5 or 6, characterised in that the second temperature is in the range from about 310°C to about 375°C.

8. A process according to claim 1 or 3, characterised in that the transition metal oxide is CuO.

9. A process according to claim 8, characterised in that the second temperature is in the range from about 310°C to 375°C, preferably in the range from about 310°C to 330°C.

10. A process according to any preceding claim, characterised in that the catalyst further comprises a promoter selected from LaCl₃, PrCl₃, NdCl₃, Pr₂O₃ or a combination thereof, in the ratio of up to about 0.2 mole of promoter per mole of transition metal.

11. A process according to any preceding claim, characterised in that the inert support comprises gamma-alumina, pumice, silica or a molecular sieve material.

12. A process according to any preceding claim, characterised in that the weight of the catalyst comprises about 10 to about 20% of the total weight of the catalyst and the inert support.

13. A process according to any preceding claim, characterised in that the source of oxygen is preheated to provide at least some of the necessary heat for the evolution of Cl₂ and the reconversion of the metal chloride in the catalyst to the metal oxide.

14. A process according to any preceding claim, characterised in that the O₂ is diluted with N₂.

## Patentansprüche

1. Verfahren zur Herstellung von Cl₂ aus HCl, das die Schritte umfaßt:
(a) Kontaktieren eines HCl-haltigen Gases - in einem stationären Bett und bei einer ersten Temperatur - mit einem Katalysator, der ein oder mehrere Übergangsmetalloxide enthält; und
(b) Kontaktieren des Katalysators - in einem stationären Bett und bei einer zweiten Temperatur - mit einer Sauerstoffquelle, dadurch gekennzeichnet,
daß der Katalysator aufweist: (i) ein Übergangsmetalloxid, das ausgewählt ist aus MnO₂, Co₂O₃, Co₃O₄, Cr₂O₃, Ni₂O₃, NiO, Mo₂O₃, CuO oder einer Kombination davon; und (ii) ein Alkalimetallchlorid, das ausgewählt ist aus LiCl, NaCl, KCl oder einer Kombination davon, und zwar im Verhältnis von ca. einem Mol Alkalimetallchlorid pro Mol Übergangsmetalloxid, und daß der Katalysator auf einem inerten Träger ist;
daß die erste Temperatur im Bereich von 25°C bis 250°C liegt, so daß unter Austritt von Wasser das Übergangsmetalloxid durch das HCl zu einem Übergangsmetallchlorid umgewandelt wird; und
daß die zweite Temperatur mindestens 300°C ist, so daß sich Cl₂ entwickelt und das Übergangsmetallchlorid im Katalysator zurückverwandelt wird zum Übergangsmetalloxid, das wiedereingesetzt werden kann.

2. Verfahren nach Anspruch 1, dadurch gekennzeichnet, daß das Übergangsmetalloxid MnO₂, Co₂O₃, Co₃O₄ oder eine Kombination davon ist.

3. Verfahren nach Anspruch 2, dadurch gekennzeichnet, daß die erste Temperatur im Bereich von ca. 100°C bis 250°C liegt.

4. Verfahren nach Anspruch 2 oder 3, dadurch gekennzeichnet, daß die zweite Temperatur im Bereich von ca. 350°C bis 375°C liegt.

5. Verfahren nach Anspruch 1, dadurch gekennzeichnet, daß das Übergangsmetalloxid Cr₂O₃, Ni₂O₃, NiO, Mo₂O₃ oder eine Kombination davon ist.

6. Verfahren nach Anspruch 5, dadurch gekennzeichnet, daß die erste Temperatur im Bereich von ca. 100°C bis 225°C liegt.

7. Verfahren nach Anspruch 5 oder 6, dadurch gekennzeichnet, daß die zweite Temperatur im Bereich von ca. 310°C bis 375°C liegt.

8. Verfahren nach Anspruch 1 oder 3, dadurch gekennzeichnet, daß das Übergangsmetalloxid CuO ist.

9. Verfahren nach Anspruch 8, dadurch gekennzeichnet, daß die zweite Temperatur im Bereich von ca. 310°C bis 375°C liegt, vorzugsweise im Bereich von ca. 310°C bis 330°C.

10. Verfahren nach irgendeinem vorhergehenden Anspruch, dadurch gekennzeichnet, daß der Katalysator zudem einen Promoter enthält, ausgewählt aus LaCl₃, PrCl₃, NdCl₃, Pr₂O₃ oder einer Kombination davon, im Verhältnis von bis zu ca. 0.2 Mol Promoter pro Mol Übergangsmetall.

11. Verfahren nach irgendeinem vorhergehenden Anspruch, dadurch gekennzeichnet, daß der inerte Träger Aluminiumoxid, Bimsstein, Siliciumdioxid oder ein Molekularsiebmaterial aufweist.

12. Verfahren nach irgendeinem vorhergehenden Anspruch, dadurch gekennzeichnet, daß das Gewicht des Katalysators ca. 10 bis 20 Gew.% des Gesamtgewichts von Katalysator und inertem Träger ausmacht.

13. Verfahren nach irgendeinem vorhergehenden Anspruch, dadurch gekennzeichnet, daß die Sauerstoffquelle vorerwärmt wird, so daß sie mindestens etwas von der notwendigen Wärme für die Chlorentwicklung und die Rückumwandlung des Metallchlorids im Katalysator zum Metalloxid stellen kann.

14. Verfahren nach irgendeinem vorhergehenden Anspruch, dadurch gekennzeichnet, daß das O₂ mit N₂ verdünnt wird.

## Revendications

1. Procédé pour produire du Cl₂ à partir d'HCl comprenant les étapes consistant
(a) à mettre en contact, dans un lit stationnaire et à une première température, un gaz contenant de l'HCl avec un un catalyseur contenant un ou plusieurs oxydes de métal de transition, puis
(b) à mettre en contact, dans ledit lit stationnaire et à une deuxième température, ledit catalyseur avec une source d'oxygène,
caractérisé en ce que le catalyseur comprend
(i) un oxyde d'un métal de transition choisi parmi MnO₂, Co₂O₃, Co₃O₄, Cr₂O₃, Ni₂O₃, NiO, Mo₂O₃, CuO ou une combinaison de ceux-ci, et
(ii) un chlorure d'un métal alcalin choisi parmi LiCl, NaCl, KCl ou une combinaison de ceux-ci, en un rapport d'environ 1 mole de chlorure de métal alcalin par mole d'oxyde de métal de transition,
et est porté par un support inerte, en ce que ladite première température est comprise entre environ 25 °C et environ 250 °C, de manière à ce que l'oxyde du métal de transition soit converti en chlorure de métal de transition par réaction avec l'HCl avec élimination d'eau, et en ce que la seconde température est au moins égale à 300 °C, de manière à ce que du Cl₂ soit dégagé et à ce que le chlorure de métal de transition dans le catalyseur soit reconverti en oxyde de métal de transition pour pouvoir être utilisé de nouveau.

2. Procédé conforme à la revendication 1, caractérisé en ce que l'oxyde de métal de transition est MnO₂, Co₂O₃, Co₃O₄ ou une combinaison de ceux-ci.

3. Procédé conforme à la revendication 2, caractérisé en ce que la première température est comprise entre environ 100 °C et environ 250 °C.

4. Procédé conforme à la revendication 2 ou 3, caractérisé en ce que la deuxième température est comprise entre environ 350 et 375 °C.

5. Procédé conforme à la revendication 1, caractérisé en ce que l'oxyde d'un métal de transition est Cr₂O₃, Ni₂O₃, NiO, Mo₂O₃ ou une combinaison de ceux-ci.

6. Procédé conforme à la revendication 5, caractérisé en ce que la première température est comprise entre environ 100 °C et environ 225 °C.

7. Procédé conforme à la revendication 5 ou 6, caractérisé en ce que la deuxième température est comprise entre environ 310 °C et environ 375 °C.

8. Procédé conforme à la revendication 1 ou 3, caractérisé en ce que l'oxyde de métal de transition est CuO.

9. Procédé conforme à la revendication 8, caractérisé en ce que la deuxième température est comprise entre environ 310 °C et 375 °C, de préférence entre environ 310 °C et 330 °C.

10. Procédé conforme à une quelconque des revendications précédentes, caractérisé en ce que le catalyseur comprend en outre un promoteur choisi parmi LaCl₃, PrCl₃, NdCl₃, Pr₂O₃ ou une combinaison de ceux-ci, en un rapport allant jusqu'à environ 0,2 mole de promoteur par mole de métal de transition.

11. Procédé conforme à une quelconque des revendications précédentes, caractérisé en ce que le support inerte englobe des matériaux comme la gamma-alumine, la pierre ponce, la silice ou le tamis moléculaire.

12. Procédé conforme à une quelconque des revendications précédentes, caractérisé en ce que le poids du catalyseur représente environ 10 à environ 20 % en poids du poids total du catalyseur et du support inerte.

13. Procédé conforme à une quelconque des revendications précédentes, caractérisé en ce que la source d'oxygène est chauffée au préalable pour fournir au moins un partie de la chaleur nécessaire pour le dégagement de Cl₂ et la reconversion du chlorure métallique contenu dans le catalyseur en oxyde métallique.

14. Procédé conforme à une quelconque des revendications précédentes, caractérisé en ce que l'O₂ est dilué avec du N₂.
